# EUROPEAN PATENT APPLICATION

(11) **EP 4 707 909 A1**
(43) Date of publication of application: **11.03.2026**
(21) Application number: 24216832.6
(22) Date of filing: 02.12.2024
(51) Int. Cl.: G02F 1/1339, G02F 1/1335, G02F 1/1337

(54) **DISPLAY PANEL**

(30) Priority: 10.09.2024 TW 113134145
(71) Applicant: Hannstar Display Corporation, Taipei City 114762 (TW)
(72) Inventor: CHIAO, Yu-Chi, 114762 Taipei City (TW); LIU, Ting Wei, 114762 Taipei City (TW); HSIAO, Shu Chan, 114762 Taipei City (TW)
(74) Representative: Becker, Eberhard

(57) **Abstract**

A display panel (10) including a first substrate (SUB1), a second substrate (SUB2), a first alignment layer (AL1), a second alignment layer (AL2), a liquid crystal layer (LCL), a first electrode layer (EL1) and a second electrode layer (EL2) is provided. The first alignment layer (AL1) and the second alignment layer (AL2) are respectively disposed on the first substrate (SUB1) and the second substrate (SUB2). The first electrode layer (EL1) and the second electrode layer (EL2) are used to drive a plurality of liquid crystal molecules (LCM) of the liquid crystal layer (LCL). While the first electrode layer (EL1) and the second electrode layer (EL2) are deactivated, a molecular long axis (MLA) of each liquid crystal molecule (LCM) against a substrate surface (SUBIs) of the first substrate (SUB1) at an inclined angle (0) is greater than 9 degrees. An orthographic projection of the molecular long axis (MLA) on the first substrate (SUB1) or the second substrate (SUB2) is parallel to an alignment direction (AD1, AD2) of the first alignment layer (AL1) or the second alignment layer (AL2).

## Description

### BACKGROUND

### Technical Field

The disclosure relates to a display technology, and more particularly, to a display panel.

### Description of Related Art

Reflective display panels primarily utilize natural or ambient light as a light source for display. Therefore, it is commonly used in outdoor or well-lit environments, such as outdoor billboards, electronic labels, sports watches, etc. In one type of current reflective display panel, spacers are provided on the reflective surfaces of display pixels. However, the placement of the spacers causes poor arrangement of the liquid crystal molecules around it, resulting in light leakage in a dark state. In addition, the residual phase retardation of the liquid crystal layer can easily cause light leakage in the dark state.

### SUMMARY

The disclosure provides a display panel with better dark state performance.

A display panel in the disclosure includes a first substrate, a second substrate, a first alignment layer, a second alignment layer, a liquid crystal layer, a first electrode layer and a second electrode layer. The first substrate and the second substrate are arranged overlapping each other. The first alignment layer and the second alignment layer are respectively disposed on the first substrate and the second substrate. The liquid crystal layer is disposed between the first alignment layer and the second alignment layer. The first electrode layer is disposed between the first alignment layer and the first substrate. The second electrode layer is disposed between the second alignment layer and the second substrate. The first electrode layer and the second electrode layer are used to drive a plurality of liquid crystal molecules of the liquid crystal layer. When the first electrode layer and the second electrode layer are disabled, an inclined angle between a molecular long axis of each of the liquid crystal molecules and a substrate surface of the first substrate is greater than 9 degrees. An orthographic projection of the molecular long axis on the first substrate or the second substrate is parallel to an alignment direction of the first alignment layer or the second alignment layer.

In an embodiment of the disclosure, the display panel further includes a plurality of spacers disposed on one of the first substrate and the second substrate, and located between the first substrate and the second substrate. Each of the spacers has a bottom surface facing the one of the first substrate and the second substrate and a top surface facing away from the bottom surface. The top surface and the bottom surface respectively have a top surface width and a bottom surface width along a direction parallel to the substrate surface. A ratio of the top surface width to the bottom surface width is greater than or equal to 0.91.

In an embodiment of the disclosure, each of the spacers of the display panel further has a sidewall surface connecting the bottom surface and the top surface, and an included angle between the sidewall surface and the bottom surface is greater than 75 degrees.

In an embodiment of the disclosure, the display panel further includes a plurality of spacers disposed between the first substrate and the second substrate. An orthographic projection of each of the spacers on the first substrate or the second substrate has a first width along the alignment direction, and has a second width along a direction perpendicular to the alignment direction. The second width is less than the first width.

In an embodiment of the disclosure, the display panel further includes a pixel driving layer disposed on the first substrate, and provided with the first electrode layer. The first electrode layer includes a plurality of reflective electrodes. The reflective electrodes are electrically connected to a plurality of active devices of the pixel driving layer, respectively.

A display panel in the disclosure includes a first substrate, a second substrate, a liquid crystal layer and a plurality of spacers. The first substrate and the second substrate are arranged overlapping each other. The liquid crystal layer is disposed between the first substrate and the second substrate. The plurality of spacers are disposed on one of the first substrate and the second substrate, and located between the first substrate and the second substrate. Each of the spacers has a bottom surface facing the one of the first substrate and the second substrate and a top surface facing away from the bottom surface. The top surface and the bottom surface respectively have a top surface width and a bottom surface width along a direction parallel to a substrate surface of the one of the first substrate and the second substrate. A ratio of the top surface width to the bottom surface width is greater than or equal to 0.91.

In an embodiment of the disclosure, each of the spacers of the display panel further has a sidewall surface connecting the bottom surface and the top surface. An included angle between the sidewall surface and the bottom surface is greater than 75 degrees.

In an embodiment of the disclosure, the display panel further includes a first alignment layer, a second alignment layer, a first electrode layer and a second electrode layer. The first alignment layer and the second alignment layer are respectively disposed on the first substrate and the second substrate. The liquid crystal layer is disposed between the first alignment layer and the second alignment layer. The first electrode layer is disposed between the first alignment layer and the first substrate. The second electrode layer is disposed between the second alignment layer and the second substrate. The first electrode layer and the second electrode layer are used to drive a plurality of liquid crystal molecules of the liquid crystal layer. When the first electrode layer and the second electrode layer are disabled, an inclined angle between a molecular long axis of each of the liquid crystal molecules and the substrate surface is greater than 9 degrees, and an orthographic projection of the molecular long axis on the first substrate or the second substrate is parallel to an alignment direction of the first alignment layer or the second alignment layer.

In an embodiment of the disclosure, an orthographic projection of each of the spacers of the display panel on the first substrate or the second substrate has a first width along the alignment direction, and has a second width along a direction perpendicular to the alignment direction. The second width is less than the first width.

In an embodiment of the disclosure, the display panel further includes a pixel driving layer disposed on the first substrate, and provided with the first electrode layer. The first electrode layer includes a plurality of reflective electrodes. The reflective electrodes are electrically connected to a plurality of active devices of the pixel driving layer, respectively.

Based on the above, in a display panel according to an embodiment of the disclosure, when the liquid crystal layer is not subjected to external forces, an inclined angle between the molecular long axis of the liquid crystal molecule and the substrate surface is greater than 9 degrees. Therefore, when the first electrode layer and the second electrode layer are enabled to operate the display panel in the dark state, the residual phase retardation of the liquid crystal layer can be effectively reduced, thereby improving the problem of light leakage in the dark state. In a display panel according to another embodiment of the disclosure, a spacer disposed between the first substrate and the second substrate has a top surface and a bottom surface parallel to the substrate surface. By ensuring that a ratio of a top surface width of the top surface to a bottom surface width of the bottom surface is greater than or equal to 0.91, the area of poor alignment of the liquid crystal molecules around the spacer can be effectively reduced, thereby improving the light leakage of the display panel in the dark state.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic cross-sectional view of a display panel according to an embodiment of the disclosure.
FIG. 2 is a schematic diagram of relationship between a molecular long axis of a liquid crystal molecule and alignment directions of alignment layers in FIG. 1.
FIG. 3 is an enlarged schematic diagram of a partial area of the display panel in FIG. 1.
FIG. 4 is a schematic top view of a spacer in FIG. 1.
FIG. 5 is a schematic top view of another modified embodiment of the spacer in FIG. 1.

### DESCRIPTION OF THE EMBODIMENTS

Exemplary embodiments of the disclosure are now described in detail with reference to the accompanying drawings. Wherever possible, the same reference numerals are used in the drawings and the description to refer to the same or similar parts.

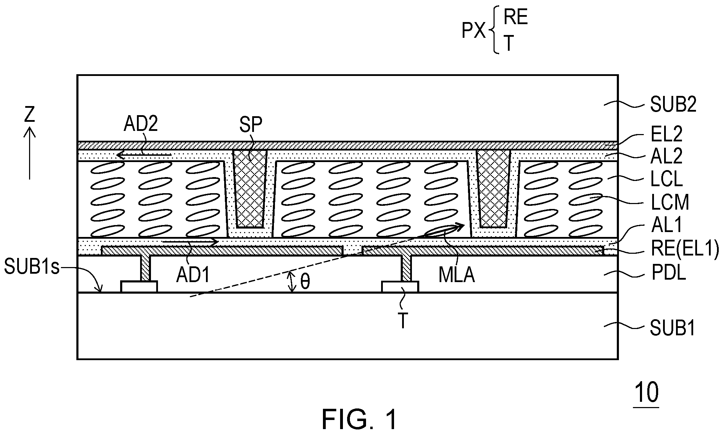

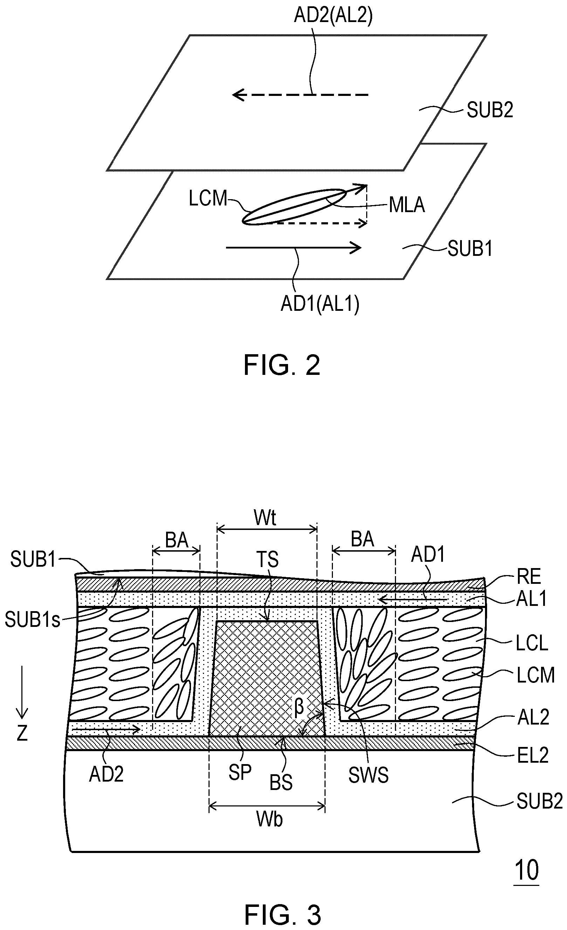

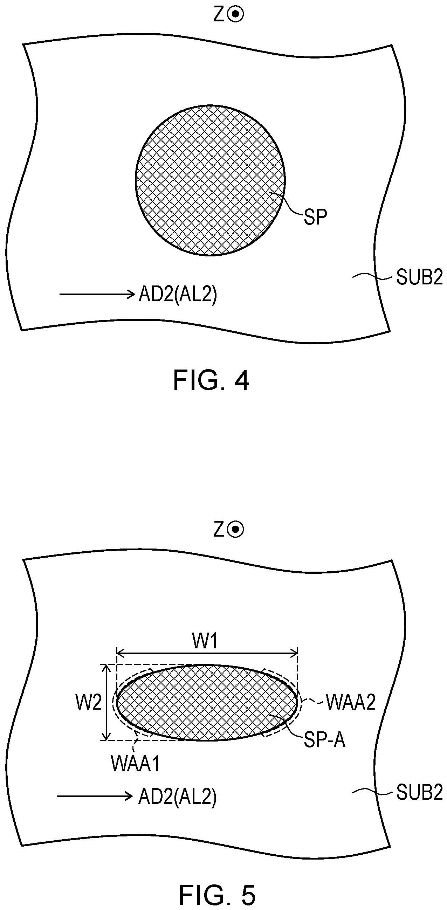

FIG. 1 is a schematic cross-sectional view of a display panel according to an embodiment of the disclosure. FIG. 2 is a schematic diagram of relationship between a molecular long axis of a liquid crystal molecule and alignment directions of alignment layers in FIG. 1. FIG. 3 is an enlarged schematic diagram of a partial area of the display panel in FIG. 1. FIG. 4 is a schematic top view of a spacer in FIG. 1. FIG. 5 is a schematic top view of another modified embodiment of the spacer in FIG. 1.

Referring to FIG. 1, a display panel 10 includes a first substrate SUB 1, a second substrate SUB2, a liquid crystal layer LCL, a first electrode layer EL1 and a second electrode layer EL2. The first substrate SUB1 and the second substrate SUB2 are arranged to overlap each other along a direction Z. It should be noted first that unless otherwise mentioned below, the overlapping relationship between two components is defined by the direction Z, and the overlapping direction will not be further elaborated.

The liquid crystal layer LCL is disposed between the first substrate SUB1 and the second substrate SUB2. The first electrode layer EL1 is disposed on the first substrate SUB1 and is located between the first substrate SUB1 and the liquid crystal layer LCL. The second electrode layer EL2 is disposed on the second substrate SUB2 and is located between the second substrate SUB2 and the liquid crystal layer LCL. The first electrode layer EL1 and the second electrode layer EL2 are used to drive a plurality of liquid crystal molecules LCM of the liquid crystal layer LCL. In the embodiment, the material of the liquid crystal layer LCL is, for example, positive liquid crystal. Therefore, while the first electrode layer EL1 and the second electrode layer EL2 are activated, an electric field produced between the two electrode layers drives the liquid crystal molecules LCM to rotate, so that molecular long axis MLA of the liquid crystal molecule tends to align in a direction parallel to the electric field.

Furthermore, the display panel 10 further includes a pixel driving layer PDL disposed on the first substrate SUB1. In the embodiment, the first electrode layer EL1 is disposed on the pixel driving layer PDL and includes a plurality of reflective electrodes RE. The material of the reflective electrodes RE includes metals, alloys, nitrides of metal materials, oxides of metal materials, oxynitrides of metal materials, or other suitable materials, or a stacked layer of metal materials and other conductive materials. The second electrode layer EL2 is, for example, a light-transmissive electrode. The material of the light-transmissive electrode includes metal oxides, such as indium tin oxide, indium zinc oxide, aluminum tin oxide, aluminum zinc oxide, or other suitable oxides, or a stacked layer of at least two of the above.

More specifically, in the embodiment, the display panel 10 may be a reflective display panel, a transflective display panel or a micro-transflective display panel. However, the disclosure is not limited thereto. In other embodiments, both the first electrode layer EL1 and the second electrode layer EL2 may be light-transmissive electrodes, i.e., the display panel may be a transmissive display panel.

Furthermore, in the embodiment, the plurality of reflective electrodes RE of the first electrode layer EL1 may be electrically connected to a plurality of active devices T of the pixel driving layer PDL, respectively. An active device T and a reflective electrode RE electrically connected to each other may form a pixel structure PX of the display panel 10 for driving a display sub-pixel. For example, the pixel driving layer PDL may further include a plurality of data lines (not shown) and a plurality of scan lines (not shown), and the active device T may be electrically connected to one data line and one scan line, but the disclosure is not limited thereto.

In order to align the liquid crystal molecules LCM of the liquid crystal layer LCL in a specific direction without being subjected to external forces (e.g., electric field), the display panel 10 further includes a first alignment layer AL1 and a second alignment layer AL2. The first alignment layer AL1 is disposed on the first substrate SUB1 and is located between the first electrode layer EL1 and the liquid crystal layer LCL. The second alignment layer AL2 is disposed on the second substrate SUB2 and is located between the second electrode layer EL2 and the liquid crystal layer LCL.

In the embodiment, an alignment direction AD1 of the first alignment layer AL1 may be anti-parallel to an alignment direction AD2 of the second alignment layer AL2. That is, the liquid crystal layer LCL of the embodiment may be driven in an electrically controlled birefringence (ECB) mode. However, the disclosure is not limited thereto. In other embodiments, the alignment direction of the first alignment layer AL1 may be perpendicular to the alignment direction of the second alignment layer AL2, that is, the liquid crystal layer LCL may be driven in a twisted nematic (TN) mode.

It is particularly noted that, in the embodiment, while the first electrode layer EL1 and the second electrode layer EL2 are deactivated, the molecular long axis MLA of the liquid crystal molecule LCM against a substrate surface SUB1s of the first substrate SUB1 at an inclined angle θ is greater than 9 degrees, and an orthographic projection of the molecular long axis MLA on the first substrate SUB1 is parallel to the alignment direction AD1 of the first alignment layer AL1 or the alignment direction AD2 of the second alignment layer AL2. Accordingly, while the first electrode layer EL1 and the second electrode layer EL2 are activated to operate the display panel 10 in the dark state, the residual phase retardation of the liquid crystal layer LCL may be effectively reduced, thereby improving the issue of light leakage in the dark state.

On the other hand, in order to create a cavity between the first substrate SUB1 and the second substrate SUB2 for filling the liquid crystal layer LCL, the display panel 10 further includes a plurality of spacers SP distributed between the first substrate SUB1 and the second substrate SUB2. In the embodiment, the spacers SP may be disposed on the second substrate SUB2 and located between the second alignment layer AL2 and the second electrode layer EL2, but the disclosure is not limited thereto. In other embodiments, the spacers SP may be disposed on the first substrate SUB1 and located between the first alignment layer AL1 and the first electrode layer EL 1.

Referring to FIG. 1 and FIG. 3, specifically, the spacer SP has a bottom surface BS facing the second substrate SUB2 and a top surface TS facing away from the bottom surface BS. It is particularly noted that the top surface TS and the bottom surface BS of the spacer SP respectively have a top surface width Wt and a bottom surface width Wb along a direction (e.g., the alignment direction AD1 of the first alignment layer AL1 or the alignment direction AD2 of the second alignment layer AL2) parallel to the substrate surface SUB1s, and a ratio of the top surface width Wt to the bottom surface width Wb is greater than or equal to 0.91. From another point of view, the spacer SP further has a sidewall surface SWS connecting the bottom surface BS and the top surface TS, and an included angle β between the sidewall surface SWS and the bottom surface BS is greater than 75 degrees.

With the aforementioned design of the spacer SP, the range of poor alignment area BA of the liquid crystal molecules LCM around the spacer SP may be effectively reduced, thereby further improving the light leakage of the display panel 10 in the dark state.

On the other hand, in the embodiment, a width (e.g., the top surface width Wt or the bottom surface width Wb) of an orthographic projection of the spacer SP on the second substrate SUB2 along any direction parallel to the substrate surface SUB1s is substantially the same. More specifically, the orthographic projection profile of the spacer SP of the embodiment on the second substrate SUB2 is, for example, circular (as shown in FIG. 4).

However, the disclosure is not limited thereto. In another modified embodiment, the orthographic projection of the spacer SP-A on the second substrate SUB2 (or the first substrate SUB1) has a first width W 1 along the alignment direction AD2 of the second alignment layer AL2 (or the alignment direction AD1 of the first alignment layer AL1) and has a second width W2 along a direction perpendicular to the alignment direction AD2. It is particularly noted that the second width W2 of the orthographic projection of the spacer SP-A on the first substrate SUB1 is less than the first width W1 (as shown in FIG. 5). Accordingly, a weak alignment area caused by the placement of the spacer SP-A during the alignment process of the alignment layer may be further reduced, thereby improving the issue of poor alignment of the liquid crystal molecules LCM around the spacer SP-A. The aforementioned weak alignment area is, for example, the area WAA1 in the second alignment layer AL2 adjacent to the spacer SP-A and facing the spacer SP-A along the alignment direction AD2, or the area WAA2 in the second alignment layer AL2 adjacent to the spacer SP-A and facing away from the spacer SP-A along the alignment direction AD2.

To sum up, in a display panel according to an embodiment of the disclosure, when the liquid crystal layer is not subjected to external forces, an inclined angle between the molecular long axis of the liquid crystal molecule and the substrate surface is greater than 9 degrees. Therefore, when the first electrode layer and the second electrode layer are activated to operate the display panel in the dark state, the residual phase retardation of the liquid crystal layer can be effectively reduced, thereby improving the problem of light leakage in the dark state. In a display panel according to another embodiment of the disclosure, a spacer disposed between the first substrate and the second substrate has a top surface and a bottom surface parallel to the substrate surface. By ensuring that a ratio of a top surface width of the top surface to a bottom surface width of the bottom surface is greater than or equal to 0.91, the area of poor alignment of the liquid crystal molecules around the spacer can be effectively reduced, thereby improving the light leakage of the display panel in the dark state.

## Claims

1. A display panel (10), comprising:
a first substrate (SUB1) and a second substrate (SUB2), arranged overlapping each other;
a first alignment layer (AL1) and a second alignment layer (AL2), respectively disposed on the first substrate (SUB1) and the second substrate (SUB2);
a liquid crystal layer (LCL), disposed between the first substrate (SUB1) and the second substrate (SUB2);
a first electrode layer (EL1), disposed between the first alignment layer (AL1) and the first substrate (SUB1); and
a second electrode layer (EL2), disposed between the second alignment layer (AL2) and the second substrate (SUB2), wherein the first electrode layer (EL1) and the second electrode layer (EL2) are used to drive a plurality of liquid crystal molecules (LCM) of the liquid crystal layer (LCL), when the first electrode layer (EL1) and the second electrode layer (EL2) are disabled, an inclined angle (θ) between a molecular long axis (MLA) of each of the liquid crystal molecules (LCM) and a substrate surface (SUB1s) of the first substrate (SUB1) is greater than 9 degrees, and an orthographic projection of the molecular long axis (MLA) on the first substrate (SUB1) or the second substrate (SUB2) is parallel to an alignment direction (AD1, AD2) of the first alignment layer (AL1) or the second alignment layer (AL2).

2. The display panel (10) according to claim 1, further comprising:
a plurality of spacers (SP, SP-A), disposed on one of the first substrate (SUB1) and the second substrate (SUB2), and located between the first substrate (SUB 1) and the second substrate (SUB2), wherein each of the spacers (SP, SP-A) has a bottom surface (BS) facing the one of the first substrate (SUB1) and the second substrate (SUB2) and a top surface (TS) facing away from the bottom surface (BS), the top surface (TS) and the bottom surface (BS) respectively have a top surface width (Wt) and a bottom surface width (Wb) along a direction parallel to the substrate surface (SUB1s), and a ratio of the top surface width (Wt) to the bottom surface width (Wb) is greater than or equal to 0.91.

3. The display panel (10) according to claim 2, wherein each of the spacers (SP, SP-A) further has a sidewall surface (SWS) connecting the bottom surface (BS) and the top surface (TS), and an included angle (β) between the sidewall surface (SWS) and the bottom surface (BS) is greater than 75 degrees.

4. The display panel (10) according to claim 1, further comprising:
a plurality of spacers (SP-A), disposed between the first substrate (SUB1) and the second substrate (SUB2), wherein an orthographic projection of each of the spacers (SP-A) on the first substrate (SUB1) or the second substrate (SUB2) has a first width (W1) along the alignment direction (AD1, AD2), and has a second width (W2) along a direction perpendicular to the alignment direction (AD1, AD2), and the second width (W2) is less than the first width (W1).

5. The display panel (10) according to claim 1, further comprising:
a pixel driving layer (PDL), disposed on the first substrate (SUB1), and provided with the first electrode layer (EL1), wherein the first electrode layer (EL1) includes a plurality of reflective electrodes (RE), and the reflective electrodes (RE) are electrically connected to a plurality of active devices (T) of the pixel driving layer (PDL), respectively.

6. A display panel (10), comprising:
a first substrate (SUB1) and a second substrate (SUB2), arranged overlapping each other;
a liquid crystal layer (LCL), disposed between the first substrate (SUB1) and the second substrate (SUB2); and
a plurality of spacers (SP, SP-A), disposed on one of the first substrate (SUB1) and the second substrate (SUB2), and located between the first substrate (SUB1) and the second substrate (SUB2), wherein each of the spacers (SP, SP-A) has a bottom surface (BS) facing the one of the first substrate (SUB1) and the second substrate (SUB2) and a top surface (TS) facing away from the bottom surface (BS), the top surface (TS) and the bottom surface (BS) respectively have a top surface width (Wt) and a bottom surface width (Wb) along a direction parallel to a substrate surface (SUB1s) of the one of the first substrate (SUB1) and the second substrate (SUB2), and a ratio of the top surface width (Wt) to the bottom surface width (Wb) is greater than or equal to 0.91.

7. The display panel (10) according to claim 6, wherein each of the spacers (SP, SP-A) further has a sidewall surface (SWS) connecting the bottom surface (BS) and the top surface (TS), and an included angle (β) between the sidewall surface (SWS) and the bottom surface (BS) is greater than 75 degrees.

8. The display panel (10) according to claim 6, further comprising:
a first alignment layer (AL1) and a second alignment layer (AL2), respectively disposed on the first substrate (SUB1) and the second substrate (SUB2), wherein the liquid crystal layer (LCL) is located between the first alignment layer (AL1) and the second alignment layer (AL2);
a first electrode layer (EL1), disposed between the first alignment layer (AL1) and the first substrate (SUB1); and
a second electrode layer (EL2), disposed between the second alignment layer (AL2) and the second substrate (SUB2), wherein the first electrode layer (EL1) and the second electrode layer (EL2) are used to drive a plurality of liquid crystal molecules (LCM) of the liquid crystal layer (LCL), when the first electrode layer (EL1) and the second electrode layer (EL2) are disabled, an inclined angle (θ) between a molecular long axis (MLA) of each of the liquid crystal molecules (LCM) and the substrate surface (SUB1s) is greater than 9 degrees, and an orthographic projection of the molecular long axis (MLA) on the first substrate (SUB1) or the second substrate (SUB2) is parallel to an alignment direction (AD1, AD2) of the first alignment layer (AL1) or the second alignment layer (AL2).

9. The display panel (10) according to claim 8, wherein an orthographic projection of each of the spacers (SP-A) on the first substrate (SUB1) or the second substrate (SUB2) has a first width (W1) along the alignment direction (AD1, AD2), and has a second width (W2) along a direction perpendicular to the alignment direction (AD1, AD2), and the second width (W2) is less than the first width (W1).

10. The display panel (10) according to claim 8, further comprising:
a pixel driving layer (PDL), disposed on the first substrate (SUB1), and provided with the first electrode layer (EL1), wherein the first electrode layer (EL1) includes a plurality of reflective electrodes (RE), and the reflective electrodes (RE) are electrically connected to a plurality of active devices (T) of the pixel driving layer (PDL), respectively.
